# EUROPEAN PATENT APPLICATION

(11) **EP 4 331 834 A1**
(43) Date of publication of application: **06.03.2024**
(21) Application number: 23180342.0
(22) Date of filing: 20.06.2023
(51) Int. Cl.: B32B 15/01

(54) **COPPER-MILD STEEL-COPPER (CMC) METAL MATERIAL FOR ELECTRICAL CONTACT TERMINAL FOR REPLACING BRASS**

(30) Priority: 29.08.2022 KR 20220108402
(71) Applicant: CS-Tech Co., Ltd., Busan, Busan 46753 (KR)
(72) Inventor: ROH, Jeongsuk, Gangseo-gu, Busan 46762 (KR)
(74) Representative: dompatent von Kreisler Selting Werner - Partnerschaft von Patent- und Rechtsanwälten mbB

(57) **Abstract**

The present invention relates to a copper-mild steel-copper (CMC) metal material for an electrical contact terminal for replacing brass capable of obtaining an electrical contact terminal having electrical conductivity superior to that of brass, and strong resistance to moisture and secular change while implementing the reduction in weight by presenting a CMC structure instead of brass as a metal material for the electrical contact terminal to lower a ratio of copper.

## Description

### [Technical Field]

The present invention relates to a metal material. More specifically, the present invention relates to a copper-mild steel-copper (CMC) metal material for electrical contact terminal for replacing brass

### [Background Art]

Brass has been used in various fields such as accessories, pipes, furniture, musical instruments, fire plates, tableware, shell casings, and valves. The brass has a characteristic that its melting point varies depending on an alloy ratio of copper and zinc.

The brass is easy to cast and has good processibility, and thus is suitable for rolling and forging, and is widely used as electrical terminals for household and industrial outlets.

The brass has the following disadvantages for electrical terminals.

First, the brass is vulnerable to moisture to have a high possibility of natural cracks.

In particular, products containing 20 wt% or more of zinc are vulnerable to humidity. In addition, there is a phenomenon in which the surface of the brass product is cracked due to an ammonia component in the air, and to prevent the phenomenon, surface treatment such as stress relief annealing, painting, and plating is required.

Second, since a secular change occurs, there is a problem in that physical properties such as hardness and the like deteriorate with the passage of time of use of a brass spring material obtained by leaving a brass processing material at room temperature or low-temperature annealing and hardening.

Third, it is difficult to reduce a weight due to its high specific gravity.

The reduction in weight is an important topic throughout the industry, and when the weight of a product or part increases, energy efficiency decreases as much and handling is not easy.

Fourth, the electrical conductivity is as low as 25.0% International Annealed Copper Standard (IACS), so that energy loss (power loss) is large.

When the electrical conductivity of the electrical terminal is low, even if an electrical signal is transmitted under the same conditions, there is a problem in that the electrical transmission efficiency is low.

In order to solve these problems, there is a need to develop technology for a metal material for electrical contact terminals capable of improving various physical properties described above by replacing brass.
Prior Art Document: KR Patent Publication No. 2019-0071027 (June 24, 2019)

### [Disclosure]

### [Technical Problem]

The present invention has been made to solve the problems, and particularly, to solve a disadvantages of brass as an electrical contact terminal, and to provide a metal material for an electrical contact terminal with excellent economical efficiency and physical properties.

### [Technical Solution]

An aspect of the present invention provides a copper-mild steel-copper (CMC) metal material for an electrical contact terminal for replacing brass including: a mild steel layer; a first pure copper layer laminated and integrally bonded on a first surface of the mild steel layer thereto; and a second pure copper layer laminated and integrally bonded on a second surface of the mild steel layer in an opposite direction to the first pure copper layer.

In the CMC metal material for the electrical contact terminal for replacing brass according to the present invention, when the frequency increases when the alternating current flows, the resistance of the mild steel layer is relatively greater than those of the first pure copper layer and the second pure copper layer, so that the specific gravity of current flowing through the first pure copper layer and the second pure copper layer is increased.

In the CMC metal material for the electrical contact terminal for replacing brass according to the present invention, the electrical conductivity is 28 to 32% IACS, which is higher than that of brass, the specific gravity is 95% or less compared to brass, the weight ratio of the first pure copper layer, the mild steel layer, and the second pure copper layer is 7 to 10%:80 to 86%:7 to 10%, and the weight ratio of copper is smaller than 70% compared to brass.

### [Advantageous Effects]

According to the present invention, there is an effect capable of obtaining an electrical contact terminal having superior electrical conductivity to brass and strong resistance to moisture and secular change even while implementing reduction in weight by presenting a CMC structure instead of brass as a metal material for the electrical contact terminal to lower a ratio of copper.

Further, according to the present invention, there is an effect capable of obtaining an electrical contact terminal having superior electrical conductivity to a CSC structure.

### [Description of Drawings]

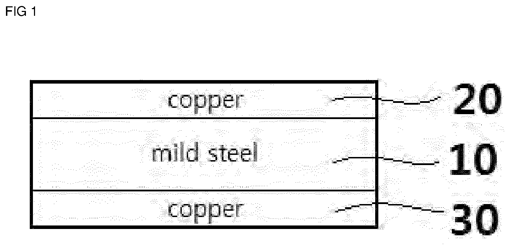

FIG. 1 is a vertical cross-sectional view of a copper-mild steel-copper metal material for an electrical contact terminal for replacing brass according to a preferred embodiment of the present invention.

### [Modes for the Invention]

Hereinafter, a preferred embodiment of the present invention will be described in detail with reference to the accompanying drawings. First, when reference numerals refer to components of each drawing, it is to be noted that although the same components are illustrated in different drawings, the same components are denoted by the same reference numerals as possible. In the following description, when it is determined that a detailed explanation of related known configurations or functions obscures the subject matter of the present invention, the detailed description will be omitted. Further, hereinafter, a preferred embodiment of the present invention will be described, but the technical spirit of the present invention is not limited thereto or restricted thereby and the embodiments can be modified and variously executed by those skilled in the art.

FIG. 1 is a vertical cross-sectional view of a copper-mild steel-copper metal material for an electrical contact terminal for replacing brass according to a preferred embodiment of the present invention. Hereinafter, the copper-mild steel-copper metal material will be referred to as a copper mild steel copper (CMC) metal material.

Referring to FIG. 1, the CMC metal material for the electrical contact terminal for replacing brass according to a preferred embodiment of the present invention includes a mild steel layer 10, a first pure copper layer 20, and a second pure copper layer 30.

The mild steel layer 10 is a layer made of mild steel and exhibits relative ductility due to its low carbon content compared to hard steel. The mild steel is carbon steel with a carbon content of around 0.2%.

More specifically, the carbon steel is classified into extramild steel with a carbon content of 0.2% or less, mild steel with a carbon content of 0.12 to 0.20%, semi-mild steel with a carbon content of 0.2 to 0.3%, semi-hard steel with a carbon content of 0.3 to 0.4%, and hard steel with a carbon content of 0.4 to 0.5%, and is used as a concept encompassing extramild steel, mild steel, semi-mild steel, and semi-hard steel.

The specific gravity of the mild steel layer 10 is 7.8 to 7.9, and for example, a mild steel layer having the specific gravity of 7.85 may be used. The conductivity of the mild steel layer 10 is 15 to 17% IACS, and for example, a mild steel layer having the conductivity of 16% IACS may be used.

The tensile strength of the mild steel layer 10 is 38 to 42 gf/mm², and for example, a mild steel layer having the tensile strength of 40 gf/mm² may be used.

A microscopic structure of the mild steel layer 10 is ferrite and perlite in a tempered state, and the specific gravity of perlite increases as the carbon content increases.

The properties of the mild steel layer 10 may be changed at room temperature or high temperature by quench aging and strain aging, which is caused by carbon and nitrogen in a solid solution as ferrite.

As the mild steel layer 10, a steel plate cold commercial (SPCC) which is a cold-rolled steel plate may be used, but is not limited thereto. The SPCC is excellent in processibility to be rolled at room temperature and has a clean surface property.

The first pure copper layer 20 is laminated on a first surface of the mild steel layer 10 to be integrally bonded.

The second pure copper layer 30 is laminated on a second surface of the mild steel layer 10 in an opposite direction to the first pure copper layer 20 to be integrally bonded.

The mild steel layer 10, the first pure copper layer 20, and the second pure copper layer 30 may be laminated and bonded through a slitting process, a surface processing process, a bonding process, a heat treatment process, a cold rolling process, and a shape correction process.

The slitting process is a process of slitting raw materials into suitable widths. In the slitting process, pure copper and mild steel are fed into a slitter line and slit in a width direction parallel to a moving direction, respectively.

The surface processing process is performed to increase the surface area for smooth bonding between layers.

In the bonding process, the mild steel is placed between two rotating rollers on which copper materials are wound, respectively, so that the mild steel is compressed between both the copper materials. In the bonding process, the copper and the mild steel are bonded only by a force acting on the surfaces of the two rotating rollers on which the copper materials are wound.

In the heat treatment process, the heat treatment is performed using one or more gases selected from hydrogen and nitrogen, and then the heat is gradually cooled. The heat treatment process softens the structure of each raw material hardened in the bonding process to lower the hardness, and may improve processibility and workability in the rolling process, which is a post-processing process. In the heat treatment process, the reason for heat treatment using hydrogen and nitrogen gases is to prevent surface corrosion, improve surface conditions, and uniformize each metal structure of the mild steel and the copper.

In the rolling process, rolling is performed to be reduced to a predetermined target thickness.

The shape correction process is a process of securing flatness by applying strong tensile force to the deformed shape through rolling and heat treatment, and the shape may be corrected by treating the product deformed through rolling and heat treatment sequentially with an extension roller that corrects the product by repeatedly bending and a correction roller that flattens the product by applying a certain tensile force.

The first pure copper layer 20 and the second pure copper layer 30 may have the specific gravity of 8.96, electrical conductivity of 100% IACS, and 5.80 × 10 m/S2 to 5.90 × 10 m/S2.

When current flows through a conductor, the conductor is stable in the case of direct current or low-frequency alternating current, but as the frequency of the alternating current increases, the resistance at the center of the conductor increases and thus the current flows to the conductor surface.

In the CMC metal material for the electrical contact terminal for replacing brass according to the present invention, mild steel having lower electrical conductivity than copper is located inside the conductor, and copper having very high electrical conductivity is disposed on the outer surface of the conductor.

Accordingly, when the frequency increases when the alternating current flows through the CMC metal material for the electrical contact terminal for replacing brass according to the present invention, the resistance of the mild steel layer is relatively greater than that of the first pure copper layer and the second pure copper layer, and thus, the specific gravity of current flowing through the first pure copper layer and the second pure copper layer is increased.

On the other hand, in the case of brass, as copper and zinc are mixed in a uniform composition ratio as a whole, the frequency of the alternating current increases, and thus, even if current tends to flow to the surface, the electrical conductivity of brass itself is low, so that the above-described characteristics of electrical flow cannot be effectively utilized.

For this reason, while the electrical conductivity of brass is 25% IACS, it was confirmed through experiments that the electrical conductivity of the CMC metal material for the electrical contact terminal for replacing brass according to the present invention has 28 to 32% IACS.

In addition, in the CMC metal material for the electrical contact terminal for replacing brass according to the present invention, the specific gravity of the first pure copper layer 20 and the second pure copper layer 30, which are relatively thin, is 8.96, whereas the specific gravity of the relatively thick mild steel layer 10 is 7.85, so that the overall specific gravity is 8.07.

On the other hand, the specific gravity of brass is 8.54, which is heavier than that of the CMC metal material for the electrical contact terminal for replacing brass according to the present invention, and thus, the object of reducing the weight cannot be achieved, as mentioned in the background art of the invention.

When the reduction in weight is realized, there is an advantage that energy efficiency is increased and handling is easy.

Since the specific gravity of the CMC metal material compared to brass is 8.07/8.54 = 0.94, the CMC metal material for the electrical contact terminal for replacing brass according to the present invention may implement a product with a brass specific gravity of 95% or less.

The first pure copper layer 20, the mild steel layer 10, and the second pure copper layer 30 constituting the CMC metal material may be combined in various weight ratios. In addition, the first pure copper layer 20 and the second pure copper layer 30 are generally prepared at the same weight ratio, but may be prepared at different weight ratios.

The first pure copper layer 20 and the second pure copper layer 30 may be prepared to be 5 to 20%, respectively, based on the total weight ratio. At this time, 10% of the first pure copper layer 20 and 10% of the second pure copper layer 30 may be prepared in the same weight ratio as 10%, or 5% of the first pure copper layer 20 and 15% of the second pure copper layer 30 may be prepared in different weight ratios.

Preferably, the first pure copper layer 20, the mild steel layer 10, and the second pure copper layer 30 constituting the CMC metal material may have a weight ratio of 7 to 10%:80 to 86%:7 to 10%.

More preferably, the first pure copper layer 20, the mild steel layer 10, and the second pure copper layer 30 constituting the CMC metal material may have a weight ratio of 7%:86%:7%.

When the fraction of the first pure copper layer 20 or the second pure copper layer 30 exceeds 10%, considering the object of the present invention to replace brass, there is a problem in that the weight increases, the cost increases, and the same hardness as brass cannot be maintained.

When the fraction of the first pure copper layer 20 or the second pure copper layer 30 is less than 7%, there is no problem in terms of electrical conductivity, but there is a problem in that electrical conductivity may be somewhat lowered, and mechanical stability and bonding strength of a clad cannot be sufficiently secured.

That is, the weight ratio as described above is experimentally calculated in consideration of cost, hardness, and strength while ensuring the electrical conductivity and considering the weight.

When the weight ratio of the first pure copper layer 20 and the second pure copper layer 30 is 8.5%, respectively, the ratio of copper to the total CMC metal material for the electrical contact terminal for replacing brass according to the present invention is only 17%. That is, according to the present invention, an electrical contact terminal having excellent physical properties may be manufactured even though less copper is used than brass having a copper weight ratio of 65%.

When comparing the weight ratio of copper, the weight ratio is 17/65 = 0.68, which is smaller than 70% of the copper content of brass according to the present invention.

Meanwhile, in the case of copper stainless steel copper (CSC) applied with stainless steel instead of mild steel, the conductivity of mild steel is 16% IACS and the thermal conductivity thereof is 62% IACS, whereas the conductivity of stainless steel is 2.5 to 3.0% IACS and the thermal conductivity thereof is 12 to 45% IACS. If the thermal conductivity of an inner core is low, a load is generated on external copper, so that due to heat generation, the electrical conductivity is lowered while the resistance is increased.

Therefore, the electrical conductivity of the CMC is superior to that of the CSC.

The CSC is suitable for replacing phosphor bronze and has excellent mechanical properties and thermal conductivity.

Meanwhile, brass mild steel brass (BMB) can also be used if it is not intended to replace brass.

The above description just illustrates the technical spirit of the present invention and various changes, modifications, and substitutions can be made by those skilled in the art to which the present invention pertains without departing from an essential characteristic of the present invention. Therefore, the embodiments and the accompanying drawings disclosed in the present invention are used to not limit but describe the technical spirit of the present invention and the scope of the technical spirit of the present invention is not limited by the embodiments and the accompanying drawings. The protective scope of the present invention should be construed on the basis of the appended claims, and all the technical spirits in the equivalent scope thereof should be construed as falling within the scope of the present invention.

### [Explanation of Reference Numerals and Symbols]

10: Mild steel layer
20: First pure copper layer
30: Second pure copper layer

## Claims

1. A copper-mild steel-copper (CMC) metal material for an electrical contact terminal for replacing brass comprising:
a mild steel layer;
a first pure copper layer laminated and integrally bonded on a first surface of the mild steel layer; and
a second pure copper layer laminated and integrally bonded on a second surface of the mild steel layer in an opposite direction to the first pure copper layer.

2. The copper-mild steel-copper (CMC) metal material for the electrical contact terminal for replacing brass of claim 1, wherein
when a frequency increases when alternating current flows, the resistance of the mild steel layer is relatively greater than those of the first pure copper layer and the second pure copper layer, so that the specific gravity of current flowing through the first pure copper layer and the second pure copper layer is increased.

3. The copper-mild steel-copper (CMC) metal material for the electrical contact terminal for replacing brass of claim 1 or 2, wherein
the electrical conductivity is 28 to 32% IACS, which is higher than that of brass,
the specific gravity is 95% or less compared to brass,
the weight ratio of the first pure copper layer, the mild steel layer, and the second pure copper layer is 7 to 10%:80 to 86%:7 to 10%, and
the weight ratio of copper is smaller than 70% compared to brass.
